(19) Europäisches Patentamt
European Patent Office
Office européen des brevets

(11) **EP 2 530 057 B1**

(12) **EUROPEAN PATENT SPECIFICATION**

(45) Date of publication and mention
of the grant of the patent:
**10.04.2019 Bulletin 2019/15**

(51) Int Cl.:
***C03B 5/027*** (2006.01)  ***C03B 5/425*** (2006.01)
***H05B 3/03*** (2006.01)  ***C03B 5/42*** (2006.01)
***F27D 11/04*** (2006.01)

(21) Application number: **12169685.0**

(22) Date of filing: **28.05.2012**

(54) **Glass melt handling equipment and method**

Behandlungsanlage für Glasschmelze und Verfahren

Équipement de manipulation de verre fondu et procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2011 US 201161491469 P**

(43) Date of publication of application:
**05.12.2012 Bulletin 2012/49**

(73) Proprietor: **Corning Incorporated
Corning, NY 14831 (US)**

(72) Inventors:
• **Barnett, Brad S.
Harrodsburg, KY 40330 (US)**
• **De Angelis, Gilbert
14858 Lindley (FR)**
• **Delamiellieure, Megan Aurora
Corning, NY 14830 (US)**

• **Giacomi, Aaron E.
Lexington, KY 40515 (US)**
• **Helmers, Timothy J.
Danville, KY 40422 (US)**
• **Kotacska, Lawrence Henry
Fort Myers, KY 33967 (US)**

(74) Representative: **Elkington & Fife LLP
Prospect House
8 Pembroke Road
Sevenoaks, Kent TN13 1XR (GB)**

(56) References cited:
**JP-U- S5 815 631        US-A- 4 660 211
US-A1- 2006 144 089**

• **DATABASE WPI Week 198839 Thomson
Scientific, London, GB; AN 1988-277022
XP002728911, -& SU 1 381 081 A1 (MATYUSHA S
I) 15 March 1988 (1988-03-15)**

## Description

TECHNICAL FIELD

The present invention relates to glass melt handling equipment and methods, and in particular, to electrical glass melting furnaces using electrodes for melting glass materials and the corresponding method of melting. The present invention is useful, e.g., for melting optical glass materials suitable for use in optical and/or electrical components of a device, such as the glass substrates for LCD displays.

BACKGROUND

Glass materials are used widely in optical and/or optoelectronic devices, such as camera and projector lenses and filters, cathode ray tubes, plasma displays, lamp envelopes, and LCD TFT and color filter substrates. In many of these applications, especially in the LCD TFT and color filter substrates, the glass materials are required to have a highly uniform chemical composition and physical properties. Inhomogeneities such as gas bubbles, streaks and cords, stones, platinum inclusions, and the like, inside the glass sheet can cause unwanted distortion of image displayed on the screen.

To produce high-quality glass materials required for such applications described supra, special glass melting furnaces are desired, where raw materials and cullets are sufficiently melted to obtain a substantially uniform glass melt with a desired chemical composition, which is subsequently subjected to bubble removal and stirring before being delivered to a forming device. In the case of the glass substrates used as LCD TFT and color filter substrates, the forming device can be a tin bath in a float forming process or an isopipe in an overflow fusion down-draw process. Corning Incorporated located at Corning, New York, U.S.A. is specialized in making LCD glass substrates with precision, pristine surface by using the overflow fusion down-draw process.

The glass melting furnaces operate at a very high temperature to enable the sufficient melting of the glass materials. For alkali-free borosilicate glasses typically used for LCD substrates, the melting temperature can be as a high as above 1500°C. The glass melt at such high temperature is highly corrosive, even for the refractory materials used in constructing the furnace. The harsh operating conditions can cause undesirable dissociation of the refractory material and consequent entrapment thereof in the glass melt, and shortened operational life expectancy of the melting furnace.

Conventional melting furnace employs a burning flame of fuel, such as natural gas and the like, to provide at least part of the energy required to bring the furnace to the high operating temperature where the glass melt is obtained. Additional joule heating effected by passing an electrical current through the glass melt supplied by refractory electrodes in direct contact with the glass melt may be used to boost the burning fuel. Various high-temperature electrically conductive materials, such as platinum and alloys thereof, molybdenum, $SnO_2$ ceramic material, graphite, and the like, were disclosed as electrode materials in electric glass melting furnaces. The electrodes could be inserted into the glass melt through either the side walls and/or the bottom wall of the furnace. However, those conventional electrically boosted melting furnaces invariably suffered from one shortcoming or another, especially short operational life expectancies.

Therefore, there remains a need of an improved glass melting furnace. The present invention satisfies this and other needs.

US 2006/144089 A1 relates to a method and an apparatus for heating a melt in a melting vessel with cooled walls.

JP S58-15631 relates to electrodes for use in a melting furnace.

SU 1381081 A1 relates to a furnace comprising a founding tank with flat phase-adjustable electrodes against the walls.

SUMMARY

Several aspects of the present disclosure are disclosed herein. It is to be understood that these aspects may or may not overlap with one another. Thus, part of one aspect may fall within the scope of another aspect, and vice versa.

Each aspect is illustrated by a number of embodiments, which, in turn, can include one or more specific embodiments. It is to be understood that the embodiments may or may not overlap with each other. Thus, part of one embodiment, or specific embodiments thereof, may or may not fall within the ambit of another embodiment, or specific embodiments thereof, and vice versa.

A first aspect of the present disclosure relates to a vessel for forming and/or containing a glass melt, comprising a first side wall, a second side wall, and a bottom wall, wherein:

each of the first side wall and the second side wall comprises:

(A) a non-electrode portion having a thickness TH1 and comprising (A1) a front non-electrode surface facing the glass melt having a height HT1 and a width WT1, (A2) a rear non-electrode surface, and (A3) a first refractory material; and (B) at least one electrode having a thickness TH2 and comprising (B1) a front electrode surface facing the glass melt having a height HT2 and a width WT2, (B2) a rear electrode portion comprising a rear electrode surface, and (B3) a second refractory material different from the first refractory material;

$$0.01 \leqslant HT2/HT1 < 1.00;$$

the at least one electrode is embedded inside the non-electrode portion; the at least one electrode and the non-electrode portion form a continuous wall; and

an electrode-pushing mechanism adapted for pushing the at least one electrode to move inwards toward the center of the furnace relative to the non-electrode portion wherein, the at least one electrode comprises a stack of multiple blocks of the electrode material to form a continuous, monolithic electrode body and wherein the multiple blocks of the electrode material form at least two segments, each connected to a separate and independent electrode-pushing mechanism adapted for pushing the segment to move inwards toward the center of the furnace independently and separately.

In certain embodiments of the vessel according to the first aspect of the present disclosure, TH1/TH2 ≤ 1.00, in certain embodiments TH1/TH2 ≤ 0.90, in certain embodiments TH1/TH2 ≤ 0.80, in certain embodiments TH1/TH2 ≤ 0.70, in certain embodiments TH1/TH2 ≤ 0.60, in certain embodiments TH1/TH2 ≤ 0.50, in certain embodiments TH1/TH2 ≤ 0.40, in certain embodiments TH1/TH2 ≤ 0.30, in certain embodiments TH1/TH2 ≤ 0.20, in certain embodiments TH1/TH2 ≤ 0.10.

In certain embodiments of the vessel according to the first aspect of the present disclosure, the vessel is a glass melting furnace.

In certain embodiments of the vessel according to the first aspect of the present disclosure, 0.30 ≤ HT2/HT1 < 1.00; in certain embodiments 0.50 ≤ HT2/HT1 < 1.00; in certain other embodiments 0.70 ≤ HT2/HT1 < 1.00.

In certain embodiments of the vessel according to the first aspect of the present disclosure, the electrode pushing mechanism comprises a rod connected directly or indirectly with the rear electrode portion, through which an external pushing force can be exerted to the rear electrode portion.

In certain embodiments of the vessel according to the first aspect of the present disclosure, the electrode pushing mechanism comprises a plurality of rods connected directly or indirectly with the rear electrode portion at multiple locations, through which external pushing forces can be exerted to the rear portion such that at least one of the horizontal and vertical tilting angles of the electrode can be controlled and adjusted.

In certain embodiments of the vessel according to the first aspect of the present disclosure, the electrode pushing mechanism comprises an automated motor adapted for intermittently or continuously driving a force applicator connected directly or indirectly with the rear electrode portion.

In certain embodiments of the vessel according to the first aspect of the present disclosure, the electrode pushing mechanism comprises an adjustable rod connected to an external fixture and the rear electrode portion, the adjustment of which results in the pushing of the electrode.

In certain embodiments of the vessel according to the first aspect of the present disclosure, the electrode comprises at least one of the following: platinum and alloys thereof; molybdenum and alloys thereof; graphite; tin oxide ceramic; and mixtures and combinations thereof.

In certain embodiments of the vessel according to the first aspect of the present disclosure, the first refractory material is selected from alumina, chromium oxide, magnesia, silica, zircon, zirconia, and mixtures and combinations thereof.

In certain embodiments of the vessel according to the first aspect of the present disclosure, during a majority of a production campaign, the front electrode surface is maintained flush or recessed with respect to the front non-electrode surface, and the distance from the front electrode surface to the front non-electrode surface is D1, where 0 cm ≤ D1 ≤ 20 cm, in certain embodiments 0.5 cm ≤ D1 ≤ 18.0 cm, in certain embodiments 0.5 cm ≤ D1 ≤ 16.0 cm, in certain embodiments 0.5 cm ≤ D1 ≤ 14.0 cm, in certain embodiments 0.5 cm ≤ D1 ≤ 12.0 cm, in certain embodiments 0.5 cm ≤ D1 ≤ 10.0 cm, in certain embodiments 0.5 cm ≤ D1 ≤ 9.0 cm, in certain embodiments 0.5 cm ≤ D1 ≤ 8.0 cm, in certain other embodiments 0.5 cm ≤ D1 ≤ 6.0 cm, in certain other embodiments 0.5 cm ≤ D1 ≤ 5.0 cm, in certain other embodiments 0.5 cm ≤ D1 ≤ 2.5 cm.

In certain embodiments of the vessel according to the first aspect of the present disclosure, during a majority of a production campaign, the front non-electrode surface is maintained recessed with respect to the front electrode surface, and the distance from the front electrode surface to the front non-electrode surface is D2, where 0 cm ≤ D2 ≤ 20 cm, in certain embodiments 0.5 cm ≤ D2 ≤ 18.0 cm, in certain embodiments 0.5 cm ≤ D2 ≤ 16.0 cm, in certain embodiments 0.5 cm ≤ D2 ≤ 14.0 cm, in certain embodiments 0.5 cm ≤ D2 ≤ 12.0 cm, in certain embodiments 0.5 cm ≤ D2 ≤ 10.0 cm, in certain embodiments 0.5 cm ≤ D2 ≤ 19.0 cm, in certain other embodiments 0.5 cm ≤ D2 ≤ 8.0 cm, in certain other embodiments 0.5 cm ≤ D2 ≤ 5.0 cm, in certain other embodiments 0.5 cm ≤ D2 ≤ 2.5 cm.

In certain embodiments of the vessel according to the first aspect of the present disclosure, the non-electrode portion is stabilized by a restraining mechanism connected to an external fixture.

In certain embodiments of the vessel according to the first aspect of the present disclosure, at least a part of the rear electrode surface is connected to a water cooling jacket or air cooling jacket.

In certain embodiments of the vessel according to the first aspect of the present disclosure, substantially the whole rear electrode surface is connected to a water cooling jacket or air cooling jacket.

In certain embodiments of the vessel according to the first aspect of the present disclosure, at least a part of the rear electrode surface is connected to an electrical supply lead.

In certain embodiments of the vessel according to the first aspect of the present disclosure, substantially the whole rear electrode surface is connected to an electrical supply lead.

In certain embodiments of the vessel according to the first aspect of the present disclosure, the water cooling jacket or air cooling jacket is connected to an electrical supply lead.

In certain embodiments of the vessel according to the first aspect of the present disclosure, the water cooling jacket or air cooling jacket is connected to the electrode-pushing mechanism.

In certain embodiments of the vessel according to the first aspect of the present disclosure, the non-electrode portion comprises a plurality of bricks comprising the first refractory material, at least part of which are stabilized by connecting to an external fixture.

In certain embodiments of the vessel according to the first aspect of the present disclosure, the electrode and non-electrode materials are chosen such that during a production campaign, the non-electrode portion wears at a rate WR1, and the electrode wears at a rate WR2, where WR1/WR2 < 1.0.

In certain embodiments of the vessel according to the first aspect of the present disclosure, WR1/WR2 $\leq$ 0.5, in certain embodiments WR1/WR2 $\leq$ 1/3, in certain other embodiments WR1/WR2 $\leq$ 1/4, in certain other embodiments WR1/WR2 $\leq$ 1/6, in certain other embodiments WR1/WR2 $\leq$ 1/8.

In certain embodiments of the vessel according to the first aspect of the present disclosure, the probability of a 150 $\mu$m particle of the first refractory material dislodged from the non-electrode portion becomes an inclusion in the final glass product is at least 5%, in certain embodiments at least 8%, in certain embodiments at least 10%, in certain other embodiments at least 20%.

A further aspect of the present disclosure relates to a method for forming and/or containing a glass melt comprising:

(I) providing a vessel as previously described as a glass melting furnace; and
(II) pushing the electrode inward toward the center of the furnace to accommodate the wear of the front surface of the electrode during a production campaign.

One or more embodiments of the various aspects of the present disclosure has one or more advantages as follows. First, by pushing the electrodes to compensate the consumed electrode material, one can extend the life of the vessel such as a glass melting furnace very significantly, effectively reducing the cost of the products per unit made from the same furnface. Second, by using large, monolithic electrode blocks, one can reduce the interface area between the electrodes and the non-electrode refractory material compared to using multiple small electrodes, effectively reducing the amount of non-refractory material dislodging from the side wall into the glass melt, thereby reducing the amount of cord, streak and inclusions sourcing from the vessel refractory material. Third, the use of large area, monolithic electrodes can reduce the current density passing through electrodes, effectively reducing the temperature of the electrode, extending the electrode life and reducing erosion of the adjacent non-electrode refractory material. Fourth, the use of pushable electrodes enables the positioning of the front electrode at an optimal location, maintaining an optical current density inside the glass melt, thereby obtaining better temperature gradient, better mixing and melting, and hence better quality of the melted glass material. Fifth, the use of large, monolithic electrodes made from multiple stacked smaller electrode blocks, achieves the benefit of a large electrode without the prohibitive cost of a unibody, single, large, monolithic electrode. Sixth, the use of a stacked electrode comprising multiple blocks enables the segmentation of the parts of the electrodes that are separately and independently pushable, making the construction, maintenance and pushing of a large electrode block economically feasible. Lastly, this invention is particularly advantageous for furnaces equipped with electrodes having a wearing rate significantly higher than the non-electrode refractory material, e.g., a glass melting tank constructed with fused zirconia bricks with side-wall $SnO_2$ electrodes.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitute a part of this specification.

BRIEF DESCRIPTION OF THE DRAWINGS

In the accompanying drawings,

FIG. 1 is a schematic illustration of the front view of a side wall of a glass melt handling vessel according to an embodiment of the present disclosure, comprising an array of electrodes embedded in a non-electrode refractory wall.

FIG. 2 is a schematic illustration of the front view of a sidewall of a glass melt handling vessel according to another embodiment of the present disclosure, comprising an array of large, monolithic electrodes embedded in a non-electrode refractory wall.

FIG. 3 is a schematic illustration of a cross-sectional view of a part of a glass melt handling vessel according to another embodiment of the present disclosure, comprising a large, monolithic electrode formed by a stack of electrode blocks

## DETAILED DESCRIPTION

In the following detailed description, for purposes of explanation and not limitation, example embodiments disclosing specific details are set forth to provide a thorough understanding of the present invention. However, it will be apparent to one having ordinary skill in the art, having had the benefit of the present disclosure, that the present invention may be practiced in other embodiments that depart from the specific details disclosed herein. Moreover, descriptions of well-known devices, methods and materials may be omitted so as not to obscure the description of the present invention. Finally, wherever applicable, like reference numerals refer to like elements.

Glass articles are typically made by first melting the raw materials and/or cullets in a melting tank, where they are heated to a high temperature where the raw materials react to form a fluidic glass melt. The glass melt is then subjected to further conditioning, such as fining to remove bubbles, homogenizing operations such as stirring, and then delivered to a forming device, such as a tin bath in a float process, an isopipe in a fusion down-draw process, a container with a slit in a slot drown-draw process, a mold in a molding or pressing process, or a roller in a rolling process, where the glass melt with a relatively low viscosity is formed into an article with desired geometry and dimension, such as a glass sheet, a glass lamp envelope, a CRT glass envelope, a near-net-shape optical lens, a tube, and the like.

Where glass articles for use in optical or optoelectronic applications such as camera lenses, LCD displays, or projector displays are made, they are typically desired to have very high compositional and optical qualities. Thus, compositional abnormalities manifested as gas bubbles, inclusions, cords, streaks, and the like, are tolerated only at an extremely low level. Sources of such defects in the glass-making and handling process are rigorously identified, reduced and ideally eliminated.

The glass-making process is a high-temperature operation demanding refractory materials for constructing the processing equipment directly in contact with the glass melt. Such refractory materials can be refractory ceramics, metals, and combinations thereof. For example, platinum and alloys thereof are frequently used as the liner material of the glass melt delivery system for making high-quality glass with a high melting temperature, due to their exceptional refractoriness and corrosion-resistance to the glass melt even at the elevated temperatures. Nonetheless, due to the high cost, substitute materials to Pt and alloys are used where possible.

For example, for a typical glass melting tank, which comprises at least one side wall, a bottom wall and optionally a crown, the side wall and the bottom wall directly contacting the glass melt, as well as the crown, are normally made of refractory ceramic bricks such as alumina, magnesia, quartz, zirconia, zircon, chromium oxide, and combinations and mixtures thereof. These ceramic bricks provide various levels of high-temperature refractoriness, corrosion resistance, and mechanical robustness and integrity for a high-temperature furnace.

It is known that the refractory wall materials in contact with the glass melt of a glass melting and delivery system can be the source of compositional abnormalities in the final glass product. For example, particles of the refractory material may dislodge from the wall during the operation and become entrained in the glass melt. If the refractory particles are completely melted and substantially evenly distributed in the final glass product, a defect may be undetectable. On the other hand, if the particle does not melt, it may manifest its presence in the final product as an inclusion with substantially different optical property from the surrounding glass matrix. If the particles melt completely only after the glass homogenization step such as stirring, cord indicated by local composition and property non-uniformity will form.

The thermal profile in the glass melting and delivery system and the reactions between the glass melt and the refractory material, and the mechanical abrasion the refractory materials are subjected to, inter alia, determine the wearing of the refractory material. One particular type of refractory material may be more corrosion-resistant than another with respect to a given glass material. The same refractory may experience heavier wearing at a location with higher temperature than another location. Different areas of the refractories may be exposed to different levels and patterns of glass melt convection, and different degrees of solid particle abrasion.

Many glass melting furnaces are equipped with electrodes to provide joule heating to facilitate the melting as mentioned supra. The electrodes may be provided through a side wall or the bottom wall. The electrodes, due to high current passing through them, tend to have a higher temperature than the surrounding refractory materials. This would heat the surrounding refractories causing excessive wear of the adjacent area. In furnaces with electrodes inserted through the side wall, the heating of the glass melt by the electric current results in an upward convection of the glass melt, subjecting the refractory materials immediately above to more wear than the materials below. Depending on the electrode and refractory materials, the electrodes and the surrounding wall may wear at different rate. The present inventors have found that, for example, in the case of a glass melting furnace having walls constructed with zirconia bricks and side wall electrodes constructed with SnO$_2$ ceramic material, the electrodes tend to wear at a higher rate than the ZrO2 side wall refractory, when certain alkali-free aluminoborosilicate glass materials are melted therein. Thus, if stationery electrodes with only a defined length are installed in the furnace, after a given period of time, the front face of the electrodes will recede to near the external surface of the adjacent zirconia bricks, so much so that the electrodes would not be able to keep glass melt from flowing out of the furnace. When this is about to happen, new electrodes would have to be installed, calling for power shutoff, halting of the production run, and even dismantling of the existing tank, which, in combination, can amount to considerable costs.

The present disclosure addresses one or more of the issues above.

Thus, a first aspect of the present disclosure is directed to a vessel for forming and/or containing a glass melt, comprising a first side wall, a second side wall, and a bottom wall, wherein:

each of the first side wall and the second side wall comprises:

(A) a non-electrode portion having a thickness TH1 and comprising (A1) a front non-electrode surface facing the glass melt having a height HT1 and a width WT1, (A2) a rear non-electrode surface, and (A3) a first refractory material; and (B) at least one electrode having a thickness TH2 and comprising (B1) a front electrode surface facing the glass melt having a height HT2 and a width WT2, (B2) a rear electrode portion comprising a rear electrode surface, and (B3) a second refractory material different from the first refractory material;

$$0.01 \leqslant HT2/HT1 < 1.00;$$

the at least one electrode is embedded inside the non-electrode portion; the at least one electrode and the non-electrode portion form a continuous wall; and an electrode-pushing mechanism adapted for pushing the at least one electrode to move inwards toward the center of the furnace relative to the non-electrode portion, wherein, the at least one electrode comprises a stack of multiple blocks of the electrode material to form a continuous, monolithic electrode body and wherein the multiple blocks of the electrode material form at least two segments, each connected to a separate and independent electrode-pushing mechanism adapted for pushing the segment to move inwards toward the center of the furnace independently and separately.

The vessel can be, e.g., a glass melting furnace, a glass conditioning vessel such as a finer, a high-temperature delivery pipe, a stirring chamber, or combinations thereof, or any other device where a glass melt needs to be heated. Thus, "handling of glass melt" includes, inter alia, melting, fining, conditioning, containing, stirring, allowing to chemically react, bubbling a gas therein, cooling, heating, forming, holding and flowing. A particularly advantageous embodiment thereof is a melting furnace where glass raw materials, cullets and the like are heated, reacted, and mixed. In addition to the joule heating provided by the electrical current passing through the glass melt supplied from the electrodes, the glass melt and/or raw materials thereof may be further subjected to other sources of thermal energy, such as a burning flame above the surface of the glass melt, an external heating source heating one or more of the side walls and/or bottom walls, or an electric current passing through the refractory walls, e.g., where at least part of the walls is constructed with a refractory metal such as Pt or alloys thereof. Such platinum system directly heated by an electric current passing through the platinum wall is sometimes called directly electrically heated platinum system.

The vessel comprises at least a first side wall, a second side wall and a bottom wall. The walls together define an inner space that can hold a liquid such as glass melt without spilling. The inner space can take various shape, such as a cylindrical shape, a modified cylindrical shape, a cubic shape, a cuboidal shape, a trapezoidal body shape, a conical shape, a truncated conical shape, or combinations thereof. The first side wall and the second side wall can be two side walls of a cubic or cuboidal vessel in opposing relationship, or two opposing parts of a continuous cylindrical wall of a cylindrical vessel. Both side walls comprise at least one electrode and a non-electrode portion which together form a continuous wall which is advantageously impervious to the glass melt in certain embodiments. The non-electrode portion comprises a first refractory material, and the electrode comprises a second refractory material which is different from the first refractory material. The bottom wall may comprise a refractory material the same or different from the first refractory material. In certain advantageous embodiments, the bottom wall comprises the first refractory material as well. In addition, the bottom wall may be equipped with bottom wall electrodes, which may or may not comprise the second refractory material. The electrodes in the first and second side walls, and optionally bottom wall electrodes, are connected to power supply advantageously with an alternate voltage, which provides a controlled electric current through the glass melt with desired current density distribution, which, according to the Joule Law, P = I$^2$R, where P is the electrical heating power, I is current and R is the resistivity of the glass melt under the melting condition, produce the desired thermal energy to the glass melt. The thermal energy may then be transferred to other parts of the glass melt via, e.g., convection or conduction. It is known that, at low temperature such as room temperature, most glass materials are poor electrical conductors; however at high temperature, their resistivity can be reduced significantly due to the higher mobility of the metal ions contained therein, making joule heating possible.

As used herein, the height of an electrode, or non-electrode portion, or a side wall is the dimension thereof in the direction parallel to the gravity vector, thickness is the dimension in the direction perpendicular to the gravity vector, and substantially perpendicular to the front surfaces of the electrode and/or non-electrode portions, and the width is the dimension in the direction perpendicular to both the thickness and height.

In certain embodiments, the first side wall and the second side wall of the vessel are substantially symmetrical with respect to a center plane of the vessel. In those embodiments, the dimensions of the various parts, portions and components of the first side wall and the second side wall, such as heights, thicknesses, lengths, and the like, are substantially the same.

In other embodiments, the first side wall and the second side wall of the vessel are substantially non-symmetrical with respect to a center plane of the vessel. Thus, in those embodiments, the dimensions of the various parts, portions and components of the first side wall and the second side wall, such as heights, thicknesses, lengths, and the like, are not all the same. Therefore, for example, when referring to the thicknesses TH1, the TH1 of the first side wall can be the independently and separately the same or different from the TH1 of the second side wall. The same goes for values such as TH2, HT1, HT2, WT1, WT2, and other dimensions and parameters.

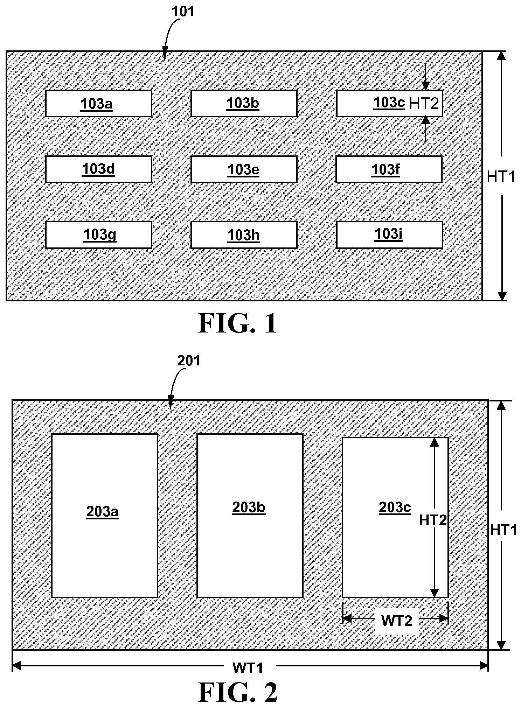

FIG. 1 schematically illustrates the front view of a side wall according to one specific embodiment of the present disclosure, comprising a non-electrode portion 101 made of a first refractory material, and multiple electrodes 103a, 103b, 103c, 103d, 103e, 103f, 103g, 103h and 103i, together forming a 3x3 array, made of a second refractory material. Advantageously, the other, opposing side wall has a substantially symmetrical structure, i.e., a structure comprising a 3x3 array of electrodes embedded in a refractory wall. The electrodes on one side wall may be connected to one pole of a single power source, e.g., a single lead of a secondary winding of a transformer, while the electrode on the other side wall connected to the other pole of the same, single power source. In a particularly advantageous embodiment, the electrodes on the same side are connected to multiple, discreet power sources, each independently and separately controlled, and form multiple electric loops with the corresponding electrodes on the other side wall. The use of a large number of electrodes may be necessary for extremely large glass handling devices such as melting furnaces, where the electrodes are relatively small compared to the overall size of the side wall. In the specific embodiment of FIG. 1, the non-electrode portion of the side wall has an overall height of HT1, and each electrode has roughly the same height of HT2, and HT2/HT1 < 1/3. Each electrode on the same side wall may be separately and independently controlled mechanically and pushable as described below. For relatively small glass handling vessels such as glass melting furnaces, the design of the embodiment illustrated in FIG. 1 has one drawback. As described supra, the interface between the electrodes and the non-electrode portion of the side wall are especially prone to higher rate of erosion due to higher temperature and strong convection of glass melt. Thus, the multiple electrodes with relatively small size embedded in the wall create a relatively large total interface area and/or length between the electrodes and first refractory material contained in the non-electrode portion, which can lead to undesirably high level of erosion of the first refractory material, eventually resulting in inclusions, cords or other compositional inhomogeneities in the final glass product.

FIG. 2 illustrates the front view of a side wall according to a second embodiment of the glass-handling vessel of the present disclosure. In this embodiment, each side wall comprises: (i) a non-electrode portion 201 having a height HT1 and a width WT1 comprising a first refractory material; and (ii) a plurality of electrodes 203a, 203b and 203c comprising a second refractory material embedded in the non-electode portion, each having a height HT2 and a width WT2, where HT2/HT1 ≥ 0.50. Compared to the embodiment of FIG. 1, the FIG. 2 embodiment utilizes electrodes that have a significantly larger HT2/HT1 ratio. Thus, if the side wall of FIG. 2 has the same height of the side wall of FIG. 1, the electrodes 203a, 203b and 203c would be much taller than any of 103a, 103b, 103c, 103d, 103e, 103f, 103g, 103h and 103i. Each electrode 203a, 203b and 203 advantageously has a front face directly in contact with glass melt during normal glass-handling operations. The use of such large, monolithic electrode blocks 203a, 203b and 203c considerably reduces the contact interface between the electrodes and the non-electrode refractory material, leading to the less corrosion of the first refractory material compared to the embodiment of FIG. 1.

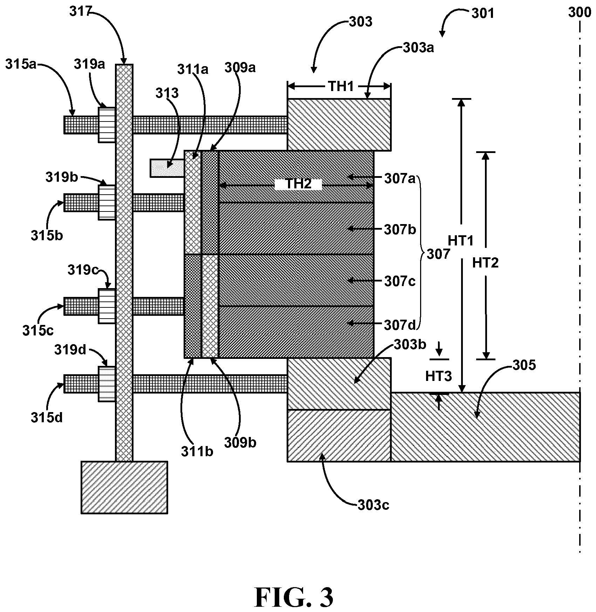

FIG. 3 schematically illustrates part of a cross-section of a glass melt-handling vessel according to an embodiment utilizing a large, monolithic electrode block similar to the embodiment shown in FIG. 2. In FIG. 3, the side wall 301 comprises a monolithic electrode block 307 formed by a stack of smaller blocks comprising a second refractory material 307a, 307b, 307c and 307d, and a non-electrode portion 303 comprising multiple blocks of a first refractory material 303a, 303b and 303c. The non-electrode portion has an overall height of HT1 and a thickness of TH1. The monolithic electrode block has a height HT2 and a thickness TH2. The front non-electrode surface of the non-electrode portion faces toward the centerline of the vessel 300, and directly contacts the glass melt (not shown) during normal operation. The front electrode surface of the electrode block 307 contacts the glass melt during normal operation of the vessel. In the specific embodiment shown in FIG. 3, the bottom of the front electrode surface is located above the upper surface of the bottom wall, and the distance therebetween is HT3.

According to the first aspect of the present disclosure, $0.01 \leq HT2/HT1 < 1.00$. Thus, the electrode has a smaller height than that of the non-electrode portion. The electrode can have a relatively small height relative to the overall side wall. For example, the HT2/HT1 ratio may be, e.g., 0.01, 0.05, 0.10, 0.15, 0.20, 0.25, and the like. In such cases, multiple electrodes may be present on the same sidewall to form a MxN array comprising M electrodes in each column in the direction of the height and N electrodes in each row in the direction of the width, such as in the embodiment shown in FIG. 1. Such electrode array can be advantageous for extremely large glass handling vessels such as glass melters having a height of at least 2 meters, in certain embodiments at least 3 meters. However, for reasons mentioned supra in connection with the reduction of corrosion of the first refractory material forming the non-electrode portion, large electrodes exhibiting a large ratio of HT2/HT1 of at least 0.30 is advantageous in certain embodiments, especially those having a relatively small overall side wall height, e.g., where $HT1 \leq 2.0$ meters, in certain embodiments $HT1 \leq 1.8$ meters, in certain embodiments $HT1 \leq 1.6$ meters, in certain embodiments $HT1 \leq 1.4$ meters, in certain embodiments $HT1 \leq 1.2$ meters, in certain embodiments $HT1 \leq 1.0$ meter, in certain embodiments $HT1 \leq 0.9$ meter, in certain embodiments $HT1 \leq 0.8$ meter. In certain embodiments, it is even more advantageous that $0.50 \leq HT2/HT1 < 1.00$; in certain other embodiments $0.70 \leq HT2/HT1 < 1.00$. Nonetheless, it is desired that the bottom of the front electrode surface is above the upper surface of the bottom wall such that there is a least a non-negligible distance HT3 between the bottom of the bottom-most electrode and the upper surface of the bottom wall of the glass melt-handling vessel. It has been found that the presence of the non-negligible distance HT3 is conducive to forming a desirable current density distribution inside the glass melt. In certain embodiments, it is desired that $HT3 \geq 5$ cm, in certain other embodiments $HT3 \geq 10$ cm, in certain other embodiments $HT3 \geq 15$ cm, in certain other embodiments $HT3 \geq 20$ cm.

As illustrated in FIGs. 2 and 3, multiple, commercially readily available blocks made of the second refractory material are stacked one over another to build a single, monolithic electrode. There are several distinctive advantages of using a stack of smaller blocks to construct a large, monolithic electrode vis-à-vis making single, monolithic electrodes having the same size of the stack. First, uni-body large size monolithic refractory electrode materials with acceptable quality can be very expensive. The cost of a uni-body, large block equivalent in volume with a stack of M smaller blocks can be significantly higher than that of the M smaller blocks combined. Second, where a very large size electrode is used, the total weight can be so heavy that pushing as a single piece can be difficult. A stack of multiple blocks can be formed into several smaller and lighter groups, each pushable separately and independently. Third, the handling of multiple, small blocks is a lot easier than a single, wieldy piece during the construction of the vessel, making it possible to move the blocks manually without the need of heavy machinery. This can be important in a plant with limited space. It was further demonstrated that a stack of multiple electrode blocks can function at substantially the same level as a single, large block as far as electrical performance is concerned. In a stacked electrode comprising multiple blocks of the second refractory material, it is highly desired that there is no substantial void or gap inside the individual blocks and between the adjacent blocks to ensure satisfactory electrical, thermal and mechanical performance of the overall electrode. Void or gap can lead to current density non-uniformity, temperature gradient, non-uniform wear of the electrode during operation, stress and breakage of the electrode block. It is difficult to make a single, large block of ceramic block typically used as electrode materials with high compositional uniformity and without void. Moreover, due to increasing difficulty in manufacture, the larger the size of a ceramic block, the more likely it will suffer from residual stress which can be detrimental to the long-term stability of the electrode.

The multiple blocks of the electrode form at least two segments stacked one over another, each connected to a separate and independent electrode-pushing mechanism adapted for pushing the segment to move inwards toward the center of the furnace independently and separately. FIG. 3 schematically illustrates a specific embodiment of this type. In this figure, blocks 307a and 307b together form an upper segment and blocks 307c and 307d together form a lower segment. The rear surface of the upper segment is connected to a water cooling jacket 311a via an intermediate flexible metal mesh 309a; and the rear surface to the lower segment is connected to a water cooling jacket 311b via an intermediate flexible metal mesh 309b. A pushing rod 315b connects with the back of the water cooling jacket 311a at one end, and with a fixture (such as a metal frame of the building housing the vessel) 317 at the other end; and a pushing rod 315c connects with the back of the water cooling jacket 311b at one end, and with the fixture 317 at the other end. The metal meshes 309a and 309b provide flexible electrical contact between the water cooling jackets and the rear surfaces of the upper and lower segments, thereby reducing the resistivity of the contacting interface. The ends of the pushing rods 315b and 315c are fixed to the fixture 317 by screw and nut structures. Thus, by rotating the nuts 319b and 319c, one can enlarge the length of the rod between the fixture 317 and water jacket, effectively pushing the back of the electrodes towards the center of the vessel. In this figure, the various bricks 303a and 303b of the non-electrode portion are stabilized by being connected to the fixture 317 as well via stabilizing bars 315a and 315d, which are fixed by the nuts 319a and 391d, respectively, similar to pushing rods 315b and 315d. Thus, when the electrode block 307 is pushed toward the center of the vessel, the non-electrode portion including 303a, 303b and 303 will remain substantially in place without moving along with the electrode block.

The timing, amount and frequency of the pushing operation of the electrodes is determined by the wearing rate of the front surfaces of the electrodes and the non-electrode portion of the side wall. As used herein, wear rate or wearing rate is defined as the average speed of the reduction of the thickness during normal operation. Thus, the electrode wearing rate is derived by dividing reduction of thickness of the electrode by the time interval in which the reduction occurred. Likewise, the non-electrode portion wearing rate is derived by dividing reduction of thickness thereof by the time interval in which the reduction occurred. Thus:

$$WR1 = \Delta TH1/t$$

$$WR2 = \Delta TH2/t$$

Where $\Delta TH1$ and $\Delta TH2$ are the thickness changes of the electrode and the non-electrode portion, respectively, and t is the duration of time in which $\Delta TH1$ and $\Delta TH2$ occurred. WR1 and WR2 roughly correspond to the receding speed of the front surfaces of the electrodes and non-electrode portions, respectively, assuming no pushing at all.

In general, the higher the wearing rate of the electrode front surface, the more the electrodes should be pushed after a given period of time to compensate for the wear. The exact wearing rate of the front surface and the non-electrode portion of the side wall can be determined by modeling, empirically or both. For example, the wearing rate can be determined by measuring the dimension of the remaining electrode and the non-electrode portion of the side wall at the end of an operation cycle or at the end of the furnace life. The exact amount of wearing after a given period of time under similar conditions for similar furnaces will then be calculated based on the empirical data. The pushing can be continuous during the life cycle of the furnace at a relatively slow pace. Generally, the wearing occurs at a relatively slow speed, e.g., on the scale of several millimeters or lower per week. This renders constant pushing undesirable because of the difficulty and cost required to achieve precise, small travel distance of the electrode block. Thus, in certain embodiments, especially where the electrode blocks are large and heavy, it is desired that the electrode block is pushed intermittently, e.g., once a month, once a quarter, once every six months, once every 18 months, once every two years, and the like, depending on the needs of the furnace operation. In certain embodiments, it is desired that at the beginning of the furnace operation, the electrodes are installed at an optimal position for the normal operation of the vessel. After the front surface of electrode wears down to a certain level, it is then pushed such that the front surface reaches substantially the same optimal location.

The pushing can be effected by manually exerting a pushing force to the rear portion of the electrode through a force applicator. In certain embodiments of the present disclosure, the electrode pushing mechanism comprises a rod connected directly or indirectly with the rear electrode portion, through which an external pushing force can be exerted to the rear electrode portion. For example, in certain embodiments, the rod can be engaged with the center of the rear face of the rear electrode portion, such that when the rod is pushed in the direction toward the center of the vessel, the electrode is pushed in that general direction as well.

In certain embodiments of the present disclosure, the electrode pushing mechanism comprises a plurality of rods connected directly or indirectly with the rear electrode portion at multiple locations, through which external pushing forces can be exerted to the rear portion such that at least one of the horizontal and vertical tilting angles of the electrode can be controlled and adjusted. For example, in certain embodiments, two rods can be engaged with different locations of the rear face of the rear electrode portion, each responsible for pushing only part of the electrode stack. The two rods may be pushed at different times or substantially simultaneously, thereby pushing the two segments of the electrode separately and independently toward the center of the vessel, depending on the specific needs of the operation of the vessel. In another example, four separate rods are engaged with the electrode block at locations in the vicinity of the four corners of the block. This multiple-contact engagement allows for both the pushing of the electrode block and the tilting of the front electrode surface in desired direction. The engagement of the rod with the electrode blocks can be direct, e.g., by pressing the rod against the rear portion of the electrode directly. Alternatively, in certain advantageous embodiments, the rods are engaged with the rear portion of the electrode indirectly via an intermediate structure, such as a water cooling jacket or air cooling jacket, a steel plate, or a steel cap covering the rear surface of the electrode in whole or in part. The use of an intermediate plate or cap is advantageous in that it would function as a force spreading device transferring the force applied by the end point of the pushing rod to a relatively large area of the rear portion of the electrode, enabling pushing brittle electrode material without the risk of breaking that could have been caused if a small end of the pushing rod is allowed to push the electrode block directly.

In certain embodiments of the present disclosure, the electrode pushing mechanism comprises an automated motor adapted for intermittently or continuously driving a force applicator connected directly or indirectly with the rear electrode portion. The motor can be controlled by a computer in certain embodiments. For example, in cases where pushing rods described supra are used to push the electrode blocks toward the center of the vessel, each pushing rod may be pushed by a motorized mechanism driven by an electric motor. The motorized mechanism and the motors are set up and controlled such that the motors are activated intermittently and allowed to run for a predetermined period of time in each pushing operation, so that the rods are pushed at a predetermined amount, thereby achieving the desired amount of pushing of the electrode blocks.

In certain embodiments, the electrode pushing mechanism comprises an adjustable rod connected to an external fixture and the rear electrode portion, the adjustment of which results in the pushing of the electrode. The pushing of the rod can be effected by adjusting the rod length between the rear face of the electrode with which the rod is engaged and the external fixture. When the distance increases, because the external fixture would not move, the electrode block would then be subjected to a pushing force. In one embodiment, the rod has a threaded end attached to the external fixture, the rotation of which extends the distance between the fixture and the end of the rod engaged with the electrode.

The electrode comprises a second refractory material different from the first refractory material that the non-electrode portion of the side wall comprises. Any refractory material that is sufficiently electrically conductive at the operating temperature of the vessel may be used. non-limiting examples of such second refractory material for the electrode include: platinum and alloys thereof; molybdenum and alloys thereof; graphite; tin oxide ceramic; and mixtures and combinations thereof. In certain embodiments, tin oxide ceramic materials are particularly advantageous, because they can be made at relatively large size at a much lower price than platinum, and they have much higher oxidation-resistance than molybdenum and graphite at elevated temperatures. In addition, tin oxide electrode, when corroded, can be dissolved into the glass melt and function as a fining agent in a finer to help remove bubbles in the glass melt.

The first refractory material that the non-electrode portion of the side wall comprises can be any refractory material that suits the need of the glass composition under the specific melting conditions. Non-limiting examples of the second refractory material include alumina, chromium oxide, magnesia, silica, zircon, zirconia, and mixtures and combinations thereof.

In certain embodiments of the vessel of the present disclosure, during a majority of a production campaign, the front electrode surface is maintained flush or recessed with respect to the front non-electrode surface, and the distance from the front electrode surface to the front non-electrode surface is D1, where 0.0 cm ≤ D1 ≤ 20.0 cm, in certain embodiments 0.5 cm ≤ D1 ≤ 18.0 cm, in certain embodiments 0.5 cm ≤ D1 ≤ 16.0 cm, in certain embodiments 0.5 cm ≤ D1 ≤ 14.0 cm, in certain embodiments 0.5 cm ≤ D1 ≤ 12.0 cm, in certain embodiments 0.5 cm ≤ D1 ≤ 10.0 cm, in certain embodiments 0.5 cm ≤ D1 ≤ 9.0 cm, in certain other embodiments 0.5 cm ≤ D1 ≤ 8.0 cm, in certain other embodiments 0.5 cm ≤ D1 ≤ 5.0 cm, in certain other embodiments 0.5 cm ≤ D1 ≤ 2.5 cm. In these embodiments involving a flush or recessed electrode relative to the non-electrode portion, essentially only the front electrode surface of the electrode block is exposed to the glass melt. Compared to embodiments involving a protruding electrode (discussed in greater detail infra), this flush or recessed electrode design leads to a more easily controlled and more uniform current density distribution across all the area exposed to the glass melt, thus a more uniform temperature, and more even corrosion of the front end of the electrode block. On the contrary, in a protruding electrode design, in addition to the front electrode surface, parts of the four side surfaces are exposed to the glass melt as well. The irregular corners of the front portion exposed to the glass melt can be subjected to convective current of the glass melt, different temperatures, different and irregular current density, leading to non-uniform corrosion of the front portion, significantly higher rate of removal of materials around the corners, and higher probability of dislodging of large particles and even cleavage of large pieces of the first refractory material from the front portion of the electrode. Such large particles and cleavage can be important sources of inclusions and cords in the final glass. In embodiments where the first refractory material has a much lower corrosion rate than the first refractory material, the recessed electrode design can be particularly advantageous. Nonetheless, the distance from the front electrode surface to the front non-electrode surface, D1, cannot be two large so that the electrode can still withhold glass melt and prevent glass melt from flowing out of the vessel through the interface of the electrode and non-electrode portion. To that end, in certain embodiments, it is advantageous that D1 ≤ ¾ TH1, in certain other embodiments D1 ≤ 2/3 TH1, in certain other embodiments D1 ≤ ½ TH1, in certain other embodiments D1 ≤ 1/3 TH1, in certain other embodiments D1 ≤ ¼ TH1.

In certain embodiments of the vessel of the present disclosure, during a majority of a production campaign, the front non-electrode surface is maintained recessed with respect to the front electrode surface, and the distance from the front electrode surface to the front non-electrode surface is D2, where 0 cm ≤ D2 ≤ 20 cm, in certain embodiments 0.5 cm ≤ D2 ≤ 18.0 cm, in certain embodiments 0.5 cm ≤ D2 ≤ 16.0 cm, in certain embodiments 0.5 cm ≤ D2 ≤ 14.0 cm, in certain embodiments 0.5 cm ≤ D2 ≤ 12.0 cm, in certain embodiments 0.5 cm ≤ D2 ≤ 10.0 cm, in certain embodiments 0.5 cm ≤ D2 ≤ 19.0 cm, in certain other embodiments 0.5 cm ≤ D2 ≤ 8.0 cm, in certain other embodiments 0.5 cm ≤ D2 ≤ 5.0 cm, in certain other embodiments 0.5 cm ≤ D2 ≤ 2.5 cm. This is the "protruding" electrode design discussed supra. While this embodiment has the disadvantages mentioned above, it nonetheless may be desirable in other embodiments, such as those (i) where the second refractory is known to be robust and wear-resistant under the operating condition; or (ii) where the distance between the front electrode surfaces of an electrode pair is desired to be small, because protruding electrode pairs would have a shortened front electrode surface distances. The shorter electrode front surface distance will enable higher firing current, and hence higher temperature of glass melt between the electrodes, and likely stronger glass melt convection and better mixing thereof in the vessel.

In certain embodiments of the vessel of the present disclosure, at least part of the non-electrode portion is stabilized by a restraining mechanism connected to an external fixture. Such stabilization can be advantageous in certain embodiments because it would prevent the movement of the non-electrode portion from moving along with the electrodes when the electrodes are being pushed. In certain embodiments, the non-electrode portion of the side wall comprises a plurality of bricks comprising the first refractory material, and at least some of these bricks are stabilized by connecting to an external fixture.

In certain embodiments, it is advantageous that the rear portion of the electrode is cooled. Such cooling can be done by using, e.g., a forced air jet blown against the rear portion, an air cooling jacket, or a water cooling jacket. As discussed supra, when a cooling jacket such as an air cooling jacket or water cooling jacket is used, the cooling jacket may be directly affixed to the rear electrode surface with or without using an intermediate metal mesh, and the pushing mechanism such as a pushing rod can be attached to the cooling jacket, such that when the rod is pushed, the pushing force is spread across a relatively large area via the cooling jacket structure. Where a cooling jacket is attached to the rear portion of the electrode, it may cover, in part or in whole, the rear electrode surface.

Electrical power is supplied via a cable lead to the electrode block. The electrical lead cable can be connected to a relatively small area of the rear portion of the electrode via, e.g., screws, and the like. On the other hand, if a cooling jacket is attached to the rear portion of the electrode block, it is advantageous to directly connect the electrical cable to the metal surface of the jacket, which would allow the current to pass to the electrode via a relatively large contact area therebetween.

In particularly advantageous embodiments of the vessel of the present disclosure, the non-electrode portion wears at a slower rate than the electrodes. Thus, if the non-electrode portion wears at a rate WR1, and the electrode wears at a rate WR2, WR1/WR2 < 1.0, in certain embodiments WR1/WR2 $\leq$ 0.5, in certain embodiments WR1/WR2 $\leq$ 1/3, in certain other embodiments WR1/WR2 $\leq$ 1/4, in certain other embodiments WR1/WR2 $\leq$ 1/6, in certain other embodiments WR1/WR2 $\leq$ 1/8. In these embodiments, the pushing of the electrodes toward the glass melt during an operation campaign would allow the compensation of the differential wearing thereof, thereby extending the operation cycle or operation life of the vessel. The smaller the WR1/WR2 ratio, the more pronounced the advantage of pushing the electrodes during operation campaigns. For example, in certain embodiments where the electrode comprises a SnO2 ceramic block, and the non-electrode portion comprises zirconia, the wearing rate ratio WR1/WR2 can be less than ½, pushing of the $SnO_2$ ceramic electrode blocks can double the vessel life compared to an otherwise identical vessel equipped with non-pushable electrode blocks. In addition, the pushing operation of the electrode blocks ensures that the front electrode surface is close to optimal location during an operation campaign, thereby increasing melting efficiency, improving electric firing pattern, achieving desirable temperature and temperature distribution in the glass melt, creating desired convection flow pattern in the vessel, thereby reducing inclusions and cords caused by either the first refractory material or the second refractory material.

In certain embodiments where $0.1 \leq WR1/WR2 \leq 0.5$, relatively frequent pushing of the electrodes is desirable, because the front electrode surface recedes quickly relative to the front non-electrode surface facing the glass melt and deviation of the front electrode surface from its optimal location is relatively fast.

In certain embodiments where $0.5 < WR1/WR2 < 1.0$, pushing of the electrodes is still advantageous in order to maintain the front electrode surface at the optical location and prevent glass melt leakage due to excess wear of the electrode block.

In certain embodiments, the thickness of the electrode TH2 is smaller than the thickness of the non-electrode portion TH1, i.e., TH1/TH2 > 1.00. In these embodiments, at least one of the front electrode surface and the rear electrode surface is recessed relative to the adjacent non-electrode surface on the same side. In such embodiments, pushing of the electrodes is still possible, regardless of whether the rear electrode surface is recessed relative to the rear non-electrode surface, and the pushing may still extend the vessel life and improve melting efficiency and quality because it maintains the optimal location of the electrode block relative to the non-electrode portion, thereby ensuring the mechanical integrity of the side wall and the optimal electrical current firing pattern.

In certain particularly advantageous embodiments, the thickness of the electrode, TH2, is at least as large as the thickness of the non-electrode portion, TH1; i.e., TH1/TH2 $\leq$ 1.00, in certain embodiments TH1/TH2 $\leq$ 0.90, in certain embodiments TH1/TH2 $\leq$ 0.80, in certain embodiments TH1/TH2 $\leq$ 0.70, in certain embodiments TH1/TH2 $\leq$ 0.60, in certain embodiments TH1/TH2 $\leq$ 0.50, in certain embodiments TH1/TH2 $\leq$ 0.40, , in certain embodiments TH1/TH2 $\leq$ 0.30, in certain embodiments TH1/TH2 $\leq$ 0.20, in certain embodiments TH1/TH2 $\leq$ 0.10. In these embodiments, long-range pushing of the electrodes during a prolonged vessel life cycle is made possible by the amount of electrode material available for consumption and pushing. Thus, such embodiments are particularly advantageous for vessels with small WR1/WR2 ratio (e.g., where $0.1 \leq WR1/WR2 \leq 0.5$) and electrodes with a high wearing rate WR2. In certain examples of these advantageous embodiments, a significant part of the overall thickness of the electrode block protrudes out of the rear non-electrode surface, at the end of which additional equipment components, such as air or water cooling jackets, fixtures for engaging the pushing rods, and the like, can be conveniently attached without touching the hot, rear surface of the non-electrode part of the side wall. In these embodiments, it is further desired that the bottom of the protruding part of the electrode block is supported by a roller or similar structure that can support at least part of the weight of the protruding part of the electrode block, while facilitating the sliding of the electrode block when it is pushed towards the center of the glass melt. Without the support structure, the weight of the unsupported, protruding part of the electrode block can cause the front electrode surface to tilt upwards, a gap to develop at the interface between the electrode block and the non-electrode part to form, and the glass melt to flow out of the vessel from the gap.

As a result of the pushing of the electrodes according to the first aspect of the present disclosure, the probability of large particles dislodging from the non-electrode portion of the side wall is reduced. Thus, the vessel according to the first aspect of the present disclosure is particularly useful for vessels such as glass melting furnaces having a probability of a 150 $\mu m$ particle of the first refractory material dislodged from the non-electrode portion becomes an inclusion in the final glass product is at least 5%, in certain embodiments at least 8%, in certain embodiments at least 10%, in certain other embodiments at least 20%. The higher this probability, the more advantageous the first aspect of the present disclosure is, because according to this first aspect, the use of large blocks of electrodes significantly reduces the interface area between the electrode and the non-electrode portion, thereby reducing the probability of generating such large particles of the first refractory material to begin with.

In certain embodiments of the vessel according to the first aspect of the present disclosure, the lowest part of the non-electrode portion is lower than the upper surface of the bottom wall, such that the lowest part of the non-electrode portion is partly stabilized by the bottom wall. In these embodiments, when the electrode block is pushed towards the center of the vessel, the tendency of the non-electrode portion immediately below the electrode block to move along as a result of the friction force between the electrode block and the non-electrode portion is reduced or completely eliminated.

Specifically, the method according to the further aspect of the present disclosure comprises a step of pushing the electrode inward toward the center of the vessel during operation thereof to accommodate wear. Manner and timing of pushing of the electrodes were described supra in connection with the various embodiments of first aspect. Where the pushing is conducted manually by workers operating the vessel, it is desired that the electrical supply to the electrical leads of the electrodes be cut off to ensure the safety of the workers. It is further desired that the pushing operation is conducted in short time to minimize the interruption of the glass handling such as melting process. Immediately after the desired amount of pushing has been achieved, the workers leave the vessel, power is restored so that the normal operation resumes. It has been demonstrated that each pushing operation of an electrode pair can be completed within 2 hours, in certain embodiments within 1 hour, in certain other embodiments within 30 minutes, in certain other embodiments within 15 minutes, thereby causing little, if any at all, disturbance to the glass production operation overall.

It will be apparent to those skilled in the art that various modifications and alterations can be made to the present invention without departing from the scope of the invention. Thus, it is intended that the present invention cover the modifications and variations of this invention provided they come within the scope of the appended claims.

## Claims

1.  A vessel for forming and/or containing a glass melt, comprising a first side wall, a second side wall, and a bottom wall, wherein:

    each of the first side wall and the second side wall comprises:

        (A) a non-electrode portion having a thickness TH1 and comprising (A1) a front non-electrode surface facing the glass melt having a height HT1 and a width WT1, (A2) a rear non-electrode surface, and (A3) a first refractory material; and
        (B) at least one electrode having a thickness TH2 and comprising (B1) a front electrode surface facing the glass melt having a height HT2 and a width WT2, (B2) a rear electrode portion comprising a rear electrode surface, and (B3) a second refractory material different from the first refractory material;

$$0.01 \leq HT2/HT1 < 1.00;$$

    the at least one electrode is embedded inside the non-electrode portion;
    the at least one electrode and the non-electrode portion form a continuous wall; and
    an electrode-pushing mechanism adapted for pushing the at least one electrode to move inwards toward the center of the furnace relative to the non-electrode portion wherein, the at least one electrode comprises a stack of multiple blocks of the electrode material to form a continuous, monolithic electrode body and wherein the multiple blocks of the electrode material form at least two segments, each connected to a separate and independent electrode-pushing mechanism adapted for pushing the segment to move inwards toward the center of the furnace independently and separately.

2. A vessel according to claim 1, wherein the vessel is a glass melting furnace.

3. A vessel according to claim 1 or claim 2, wherein $0.30 \leq HT2/HT1 < 1.00$.

4. A vessel according to any of the preceding claims, wherein during a majority of a production campaign the front electrode surface is flush or recessed with respect to the front non-electrode surface, the distance from the front electrode surface to the front non-electrode surface is D1, and wherein $0\ cm \leq D1 \leq 20\ cm$.

5. A vessel according to any of the preceding claims, wherein the electrode comprises at least one of the following: platinum; molybdenum; graphite; tin oxide ceramic, and mixtures and combinations thereof.

6. A vessel according to any of the preceding claims, wherein the first refractory material is selected from alumina, chromium oxide, magnesia, zircon, zirconia, and mixtures and combinations thereof.

7. A vessel according to any of the preceding claims, wherein at least a part of the rear electrode surface is connected to a water cooling jacket or air cooling jacket.

8. A vessel according to any of the preceding claims, wherein at least a part of the rear electrode surface is connected to an electrical supply lead.

9. A method for forming and/or containing a glass melt comprising:

(I) providing a vessel according to any of the preceding claims as a glass melting furnace; and
(II) pushing the electrode inward toward the center of the furnace to accommodate the wear of the front surface of the electrode during a production campaign.

**Patentansprüche**

1. Gefäß zum Bilden und/oder Enthalten einer Glasschmelze, umfassend eine erste Seitenwand, eine zweite Seitenwand und eine untere Wand, wobei:

die erste Seitenwand und die zweite Seitenwand jeweils folgendes umfassen:

(A) einen elektrodenlosen Teil mit einer Dicke TH1 und umfassend (A1) eine vordere elektrodenlose Oberfläche, die zu der Glasschmelze gerichtet ist, mit einer Höhe HT1 und einer Breite WT1, (A2) eine hintere elektrodenlose Oberfläche und (A3) ein erstes feuerfestes Material; und
(B) mindestens eine Elektrode mit einer Dicke TH2 und umfassend (B1) eine vordere Elektrodenoberfläche, die zu der Glasschmelze gerichtet ist, mit einer Höhe HT2 und einer Breite WT2, (B2) einen hinteren Elektrodenteil, der eine hintere Elektrodenoberfläche umfasst, und (B3) ein zweites feuerfestes Material, das sich von dem ersten feuerfesten Material unterscheidet;

$$0{,}01 \leq HT2/HT1 < 1{,}00;$$

die mindestens eine Elektrode in dem elektrodenlosen Teil eingebettet ist;
die mindestens eine Elektrode und der elektrodenlose Teil eine ununterbrochene Wand bilden; und
mit einem Elektroden-Druckmechanismus, der die mindestens eine Elektrode drückt, so dass sich diese einwärts in Richtung der Mitte des Ofens im Verhältnis zu dem elektrodenlosen Teil bewegt, wobei die mindestens eine Elektrode einen Stapel mehrerer Blöcke des Elektrodenmaterials umfasst, so dass ein durchgängiger, monolithischer Elektrodenkörper gebildet wird, und wobei die mehreren Blöcke des Elektrodenmaterials mindestens zwei Segmente bilden, wobei jedes Segment mit einem separaten und unabhängigen Elektroden-Druckmechanismus verbunden ist, der das Segment so drücken kann, dass es sich unabhängig und separat einwärts in Richtung der Mitte des Ofens bewegt.

2. Gefäß nach Anspruch 1, wobei das Gefäß ein Gasschmelzofen ist.

3. Gefäß nach Anspruch 1 oder 2, mit $0{,}30 \leq HT2/HT1 < 1{,}00;$

4. Gefäß nach einem der vorstehenden Ansprüche, wobei während einem Großteil der Produktionskampagne die vordere Elektrodenoberfläche bündig oder ausgespart ist im Verhältnis zu der vorderen elektrodenlosen Oberfläche, wobei der Abstand von der vorderen Elektrodenoberfläche zu der vorderen elektrodenlosen Oberfläche D1 ist, und mit 0 cm ≤ D1 ≤ 20 cm.

5. Gefäß nach einem der vorstehenden Ansprüche, wobei die Elektrode mindestens eines der folgenden umfasst: Platin, Molybdän, Graphit, Zinnoxidkeramik und Gemische und Kombinationen davon.

6. Gefäß nach einem der vorstehenden Ansprüche, wobei das erste feuerfeste Material ausgewählt ist aus Aluminiumoxid, Chromoxid, Magnesiumoxid, Zirkon, Zirkoniumoxid und Gemische und Kombinationen davon.

7. Gefäß nach einem der vorstehenden Ansprüche, wobei mindestens ein Teil der hinteren Elektrodenoberfläche mit einem Wasserkühlungsmantel oder einem Luftkühlungsmantel verbunden ist.

8. Gefäß nach einem der vorstehenden Ansprüche, wobei mindestens ein Teil der hinteren Elektrodenoberfläche mit einer Netzzuleitung verbunden ist.

9. Verfahren zum Bilden und/oder Enthalten einer Glasschmelze, umfassend:

(I) Bereitstellen eines Gefäßes nach einem der vorstehenden Ansprüche als einen Glasschmelzofen; und
(II) Drücken der Elektrode nach innen in Richtung der Mitte des Ofens, um den Verschleiß der vorderen Oberfläche der Elektrode während der Produktionskampagne zu akkommodieren.

## Revendications

1. Récipient pour former et/ou contenir du verre fondu, comprenant une première paroi latérale, une seconde paroi latérale et une paroi inférieure,

chacune de la première paroi latérale et de la seconde paroi latérale comprenant :

(A) une partie non-électrode ayant une épaisseur TH1 et comprenant (A1) une surface non-électrode avant faisant face au verre fondu ayant une hauteur HT1 et une largeur WT1, (A2) une surface non-électrode arrière, et (A3) un premier matériau réfractaire ; et
(B) au moins une électrode ayant une épaisseur TH2 et comprenant (B1) une surface d'électrode avant faisant face au verre fondu ayant une hauteur HT2 et une largeur WT2, (B2) une partie d'électrode arrière comprenant une surface d'électrode arrière, et (B3) un second matériau réfractaire différent du premier matériau réfractaire ;

$$0,01 \leq HT2/HT1 < 1,00 ;$$

l'au moins une électrode étant intégrée à l'intérieur de la partie non-électrode ;
l'au moins une électrode et la partie non-électrode formant une paroi continue ; et
un mécanisme de poussée d'électrode conçu pour pousser l'au moins une électrode pour qu'elle se déplace vers l'intérieur vers le centre du four par rapport à la partie non-électrode, l'au moins une électrode comprenant une pile de blocs multiples du matériau d'électrode pour former un corps d'électrode monolithique continu et les blocs multiples du matériau d'électrode formant au moins deux segments, chacun étant connecté à un mécanisme de poussée d'électrode séparé et indépendant conçu pour pousser le segment pour qu'il se déplace en direction du centre du four indépendamment et séparément.

2. Récipient selon la revendication 1, le récipient étant un four de fusion du verre.

3. Récipient selon la revendication 1 ou 2, 0,30 ≤ HT2/HT1 < 1,00.

4. Récipient selon l'une quelconque des revendications précédentes, pendant la majeure partie d'une campagne de production, la surface d'électrode avant étant de niveau ou encastrée par rapport à la surface non-électrode avant, la distance entre la surface d'électrode avant et la surface non-électrode avant étant D1, et 0 cm ≤ D1 ≤ 20 cm.

5. Récipient selon l'une quelconque des revendications précédentes, l'électrode comprenant au moins l'un des éléments suivants : platine ; molybdène ; graphite ; céramique d'oxyde d'étain, et mélanges et combinaisons de ceux-ci.

6. Récipient selon l'une quelconque des revendications précédentes, le premier matériau réfractaire étant choisi parmi l'alumine, l'oxyde de chrome, la magnésie, le zircon, la zircone et les mélanges et combinaisons de ceux-ci.

7. Récipient selon l'une quelconque des revendications précédentes, au moins une partie de la surface d'électrode arrière étant reliée à une chemise de refroidissement à eau ou à une chemise de refroidissement à air.

8. Récipient selon l'une quelconque des revendications précédentes, au moins une partie de la surface d'électrode arrière étant reliée à un câble d'alimentation électrique.

9. Procédé pour former et/ou contenir du verre fondu comprenant les étapes consistant à :

  (I) fournir un récipient selon l'une quelconque des revendications précédentes en tant que four de fusion du verre ; et
  (II) pousser l'électrode vers l'intérieur en direction du centre du four pour tenir compte de l'usure de la surface avant de l'électrode pendant une campagne de production.

101

| | | |
|---|---|---|
| **103a** | **103b** | **103c** HT2 |
| **103d** | **103e** | **103f** |
| **103g** | **103h** | **103i** |

HT1

## FIG. 1

201

| | | |
|---|---|---|
| **203a** | **203b** | **203c** |

HT2

HT1

WT2

WT1

## FIG. 2

EP 2 530 057 B1

FIG. 3

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006144089 A1
- JP S5815631 A

- SU 1381081 A1